# EUROPEAN PATENT APPLICATION

(11) **EP 1 008 639 A1**
(43) Date of publication of application: **14.06.2000**
(21) Application number: 99204279.6
(22) Date of filing: 13.12.1999
(51) Int. Cl.: C09J 121/02

(54) **Application of a cold watery contact glue containing at least 20% of a homopolymer, contact glue adapted for application, and preparation thereof and products made by use of the contactglue**

(30) Priority: 11.12.1998 NL 1010792
(71) Applicant: International Adhesives BV, 3100 AH Schiedam (NL)
(72) Inventor: Houtstra, Romke Jacobus, 3155 BD Maasland (NL); Houtstra, Adrianus Wiggert, 2554 HR Den Haag (NL)
(74) Representative: Van Assen, Jan Willem Bernard

(57) **Abstract**

The invention relates to the use of aqueous contact adhesive, which contains at least 20% of a homopolymer, processes for the preparation thereof, processes for application thereof, and objects manufactured with the help of it.

More especially the invention relates to the application of a contact adhesive on sucking carrier materials with noticeable thickness, especially cardboard planos, which contact adhesive is prepared by mixing of a rubber latex and a homopolymer.

The invention is more especially applicable to preglued pianos of cardboard, which afterwards after folding and exerting of local pressure are moulded tot set-up cases or crates.

## Description

The invention mainly relates to a use of aqueous cold contact adhesive, which dries to a substantially non tacky state and adheres to another non tacky layer of the same contact adhesive, comprising a rubber latex and a polymer dispersion differing therefrom in an amount of 20% or more. Furthermore the invention relates to a contact adhesive suitable for this application, as well as the preparation thereof and to objects manufactured by application of the contact adhesive.

Contact adhesives are solutions or dispersions which are applied onto two surfaces to be adhered, dried, hereafter the said two surfaces to be adhered are pressed against each other, usually without heating.

In the said case there is meant an aqueous dispersion adhesive.

The dried surfaces are in principle without tackiness and do not adhere to most other materials and adhere therefor only under application of pressure above a critical pressure to another surface provided with dried adhesive.

In EP-B-0338304 on page 1, lines 10-17 is mentioned the combination of a natural rubber elastomer, especially a latex, a tackiness enhancer and other compound. A typical formulation comprises 55-60 weight percent of a natural rubber latex emulsion with a high ammonia content, 30-40 weight percent styrene-acrylate emulsion and small amounts of wetting agents, latex stabilisators, antioxidants, biocide and thickening agents.

It is mentioned that such compositions possess good "cold" adhering properties, but furthermore also have disadvantages. The compositions namely possess the bad aging properties of compositions based on natural rubber, comprising softening and discolouration of the adhesives, disagreeable smell and possibly foaming in liquid state.

Furthermore the inventors have observed that the combination of natural rubber latex and styrene-acrylate emulsion on application on printed cardboard or plano causes the bleeding of the printing ink.

A further problem noted by the inventors is that with the combination of natural rubber latex and styrene-acrylate emulsion no good so-called planos can be made.

Planos are cardboard plates provided with folds and punched out parts, which are provided on suitable places with a layer of adhesive, which can be piled up on each other and if desired can be folded out and pressed together into setting up packaging cases or crates for vegetables, fruits and potted plants or flowers.

The further problem with planos is that the planos provided with adhesive layer at piling up adhere too fast to each other because the adhesive is too active and moreover ages too fast.

With aging too fast is meant a shelf life of less than one year of planos provided with an adhesive layer.

Another disadvantage of the application of styrene-acrylate polymer dispersion is, that this polymer after applying on and into the paper- or cardboard substrate has a strong tendency for migrating to the contents of the setting-up packaging cases or crates manufactured from these planos. These said setting-up cases or crates are nearly always used in the so-called GVF-sector. In the GVF-sector the setting-up cases or crates serve for the packaging of general goods (G) and vegetables (V) and fruits (F). With general goods are meant potted plants and fish for instance. Of course migration of styrene-acrylate to food stuffs is extremely undesirable.

In this context further is known from CH-664971 the modification of the properties of natural rubber latex with polyvinyl acetate as homo- or copolymer in an amount of 20 weight percent for the enhancement of the aging resistance for application as contact adhesive on packaging film.

On page 2 right column, lines 24-27 of the said document, it is mentioned that a natural rubber latex provided with a vinyl acetate homopolymer dispersion only, give a relative "dry" adhesive film with moderate adhesive power. By using copolymers of vinyl acetate more tacky adhesive films can be obtained. The more tacky adhesive films are more specially usable on non sucking carrier materials.

If according to page 2 right column lines 38-41 sticking to each other of coils of film rolls threatens to occur, as anti blocking agent micronized pyrogenous silica powder can be admixed with the latex adhesive.

CH-664971, however, mentions no solution for the manufacture of planos from a porous or sucking material such as cardboard.

The invention aims at solving the problems mentioned above by application of a contact adhesive formed of a combination of a rubber latex and an aqueous homopolymer dispersion.

Surprisingly it is shown that the problems of affecting of print, too strong adhesive power and too fast aging can be avoided by suitable choice of the ratio between rubber latex and homopolymer.

With respect to application of the combination of a natural rubber latex and a polyvinyl acetate latex for self adhering envelopes the now following is mentioned in Handbook of Adhesives, Editor Irving Skeist, 3rd edition New York, Van Nostrand Reinhold on pages 174 and 182.

If natural rubber latex dries, some of the soluble non rubber components is brought to the surface by water transport and remained there as a thin film when the drying is complete. This has a tendency to reduce the surface tackiness of the rubber, whereby generally fresh latex films do not adhere when pressed against another surface. However, when the film is pressed against a same like surface, it is believed that the thin non-rubber layer is replaced, which causes that the two natural rubber surfaces reach contact and form a bond, which causes the goof self adhesion of films of natural rubber latex. This characteristic has evolved to the development of the self adhering envelope. The high cohesive strength of the rubber provides a safety aspect for assuring that the envelope cannot be opened without that this fact is made clear by damage of the closure.

As formulation for self adhering envelopes on page 182 the now following is mentioned.
1. Self adhering envelopes

| | |
|---|---|
| 60% Natural latex | 167 |
| 10% Potassium hydroxide solution | 0.2 |
| 50% Aqueous dispersion of zinc diethyl dithiocarbamate | 1.0 |

Preservation against bacterial deterioration is necessary, as well as against fungus deterioration. Zinc dithiocarbamate meets both functions. Sometimes it is found that in a case a batch of latex shows an insufficient degree of self adhesion; this can be remedied by addition of a small amount of plasticizer with a high molecular weight. A liquid 50% poly butene dispersion added tot 10 pph (parts per hundred parts rubber) as a 50% emulsion is suitable.

In some cases it can be necessary to enhance the adhesion to the paper, which causes that the envelope cannot be opened without tearing of the paper; a poly vinyl acetate latex added in an amount of 10 pph (parts per hundred parts rubber) was found to obtain this without noticeable loss of self tackiness.

With respect to the foregoing known from the Handbook for Adhesives by Irving Skeist, it is remarked that according to the invention a much greater amount of monomer is used, to know 30-50 parts dry matter per 100 parts of dry rubber ingredients.

By employing of a relative much higher amount of homo polymer for enhancement of the adhesion to paper or cardboard, surprisingly a process became possible for the manufacture of planos, well meeting the requirements, which was before impossible.

With respect to the use of a plasticizer, as proposed in the Handbook of Adhesives by Irving Skeist for the cold contact adhesive of self adhering envelopes, it is remarked that according to the invention this is completely avoided.

Use of a plasticizer brings along the risk that with storage of planos the print can be affected by the plasticizer, whereby this can bleed out. Of course affected print is a great disadvantage for the appearance of the final product, the setting-up case or crate.

In some aspect one can state that use of a plasticizer depending on the amount or kind thereof, introduces the same problems as those of a too strong adhering, bleeding out, migrating and fast aging polymer as the before mentioned styrene-acrylate polymer. Although a polybutene polymer per se has not so much poisonous properties, this is very certain the case with other plasticizers. Because of all the objections before mentioned against a too active polymer as styrene-acrylate polymer in a contact adhesive, therefore the use of a plasticizer is to be definitely advised against.

As rubber latices can be employed natural rubber latex, gutta percha latex, balata latex, isoprene rubber latex, neoprene rubber latex, or a latex of another suitable rubber polymer or mixtures thereof.

Preferentially in the cold contact adhesive a high ammonia content natural rubber latex is employed.

In the contact adhesive preferentially polyvinyl acetate or polyvinyl chloride is employed.

The homopolymer latex is inter alia stabilized with polyvinyl alcohol, carboxy methyl cellulose, dextrin or casein.

The most preferentially used homopolymer is aqueous polyvinyl acetate stabilized with polyvinyl alcohol.

With respect to stabilization of an adhesive based on synthetic rubber latex for used on paper, plywood, etc., in JP 62112675 A a composition is mentioned, which contains next to synthetic rubber latex, polyvinyl acetate, polyvinyl alcohol, and an alkali metal salt of perjodic acid.

In this document are mentioned the now following composition limits per 100 weight percent as solid matter synthetic rubber latex, polyvinyl acetate emulsion 1-50, polyvinyl alcohol 0.1-10 and alkali metal salt of perjodic acid 0.01-0.5.

However, the said adhesive composition is meant for application with high speed with a natural roller coater and not as contact adhesive as in the case of the present invention.

A reference to this document is thought desirable because the concentration range of the latex mixture and the homopolymer is in the range of the present invention.

Preferentially the contact adhesive is prepared by mixing in a propeller mixer of both principal components and minor components such as antifoaming agents and the like.

Most preferentially 30-50 parts dry matter of about 50 weight percent vinyl acetate latex stabilized with vinyl alcohol are mixed with 100 parts of rubber, present in natural rubber latex.

A very most preferred contact adhesive is prepared by mixing of 25 parts of underneath with polyvinyl alcohol stabilized aqueous polyvinyl acetate dispersion A with 75 parts of an average/high viscosity modified natural rubber latex B.

| Homopolymer vinyl acetate A | |
|---|---|
| Dry matter | about 50% |
| Viscosity | 8000 to 10000 mPa·s |
| pH | about 4.50 |
| Structure index | 2.56 |

| Natural rubber latex B | |
|---|---|
| Density | 0.96 |
| Dry matter | about 60% |
| Viscosity | 2050 mPa·s |

Taking into account variations in compositions the properties of a good aqueous cold contact adhesive are the now following:

| | |
|---|---|
| Dry matter | 52-60% |
| Viscosity | 4500-5500 mPa·s |
| pH | 9.50-9.91 |

The before by mixing of 1 part polyvinyl acetate dispersion and 3 parts natural rubber latex obtained aqueous cold contact adhesive has for example the now following properties:

| | |
|---|---|
| Dry matter | 56% |
| Viscosity | 5000 mPa·s |
| pH | 9.71 |

The before said cold contact adhesives can be employed in the following matter for obtaining of an adhesion or to apply adhesion:
1. Applying of a coating of the cold contact adhesive in an effective amount on a substrate or part thereof;
2. Drying of the aqueous emulsion;
3. If desired, contacting with each other of substrate parts provided with a coating under pressure.

It is remarked that this process is, as before noted, especially suited for the manufacture of planos, and that the planos also yet after a year are suited for conversion in setting-up cases or crates.

According to an advantageous embodiment the cold contact adhesive is applied in an amount of 5-20 g/m².

Preferably, the coating of the contact adhesive is applied by means of spraying.

Without limitation to any process the adhesive layer can besides very well be applied by rolling, applying with printing blocks (dies) or sprinkler nozzles.

Further, preferably the coating is applied on a fibrous substrate. Especially by application on cardboard very good quality planos can be obtained.

Except for the composition of the cold contact adhesive and the herewith obtained adhesion, the invention relates also to objects manufactured by means of it, whereby on suitable places an adhesive layer is applied.

More especially the invention relates to planos and by folding and on suitable places exerting of pressure on the shaped object, whereby setting-up cases or crates are formed.

When the contact adhesive is applied on a fibrous substrate, such as felt, it is possible to make herewith a fixable filter or a special shaped and folded filter.

The invention relates next to mainly planos of cardboard and setting-up cases or crates manufactured from the planos, also to a filter or object of felt obtained by eventually folding and exerting of pressure on suitable places on a fibrous substrate provided with contact adhesive.

The invention is not limited to the embodiments mentioned in the specification as illustrations, but extends to all variations thereof within the scope of the appending claims.

## Claims

1. Use of cold contact adhesive, which dries to a mainly non tacky state and only on contact above a critical pressure adheres to another dried, non tacky layer of the same contact adhesive, comprising a rubber latex and an aqueous homopolymer dispersion therefrom differing in an amount of 20% or more, characterized in that, the contact adhesive is used on sucking carrier materials with noticeable thickness, more especially planos.

2. Use of cold contact adhesive according to claim 1, characterized in that, the sucking carrier material is provided with a layer of contact adhesive, wherein the rubber latex is natural rubber latex, gutta percha latex, isoprene rubber latex, neoprene rubber latex for mixtures thereof.

3. Use of cold contact adhesive according to claim 1 or 2, characterized in that, the rubber latex is a rubber latex with a high ammonia content.

4. Use of cold contact adhesive according to each of the preceding claims, characterized in that, the contact adhesive layer contains a homopolymer chosen from polyvinyl acetate or polyvinyl chloride.

5. Use of cold contact adhesive according to any one of the preceding claims, characterized in that, in the contact adhesive a homopolymer latex is stabilized with polyvinyl alcohol, carboxy methyl cellulose, dextrin or casein.

6. Use of cold contact adhesive according to any one of the preceding claims, characterized in that, in the contact adhesive the homopolymer vinyl acetate is stabilized with polyvinyl alcohol.

7. Use of cold contact adhesive according to any one of the preceding claims, characterized in that, both main contact adhesive components and eventual other minor components are mixed in a propeller mixer.

8. Use of cold contact adhesive according to any one of the preceding claims, characterized in that, in the contact adhesive 30-50 parts dry matter polyvinyl acetate, stabilized with polyvinyl alcohol are mixed with 100 parts rubber dry matter present in natural rubber latex.

9. Contact adhesive according to claim 8, characterized in that, 25 parts of the polyvinyl alcohol stabilized polyvinyl acetate dispersion A, mentioned below, are mixed with 75 parts of stabilized natural rubber latex B, also mentioned below, with average/high viscosity:
| Homopolymer vinyl acetate A | |
|---|---|
| Dry matter | about 50% |
| Viscosity | 8000 to 10000 mPa·s |
| pH | about 4.50 |
| Structure index | 2.56 |
| Natural rubber latex B | |
|---|---|
| Density | 0.96 |
| Dry matter | about 60% |
| Viscosity | 2050 mPa·s |

10. Contact adhesive according to claim 8 or 9, characterized in that, this has the following characteristics:
| | |
|---|---|
| Dry matter | 52-60% |
| Viscosity | 4500-5500 mPa·s |
| pH | 9.50-9.91. |

11. Process for the preparation of a cold adhesive adhesion comprising:
1. applying of a layer cold contact adhesive as mentioned in one of the claims 1-10, in an effective amount on a substrate or a part thereof;
2. drying of the aqueous emulsion;
3. if desired, contacting of the substrate parts provided with an adhesive layer with each other under pressure.

12. Process according to claim 11, characterized in that, the layer is applied in an amount of 5-20 g/m².

13. Process according to claim 11, characterized in that, the coating is applied by means of spraying.

14. Process according to claim 11 or 12, characterized in that, the coating is applied by means of rollers, printing blocks (dies), or sprinkler nozzles.

15. Process according to any of the claims 11 to 14, characterized in that, the coating is applied on fibrous material, such as for example cardboard, paper or felt.

16. Flat object, which can be set-up into a case or crate, which is provided with a cold contact adhesive in suitable places, manufactured according to the process according to claims 11 to 14.

17. Finished set-up case or crate, manufactured by folding and by exerting pressure in suitable places of the object according to claim 15.

18. Substantially flat object of felt, which is provided in suitable places with a cold contact adhesive according to claims 11 to 14.

19. Functional object, manufactured by exerting pressure in suitable places and by possibly folding moulding of the object according to claim 18.
